(19) Europäisches Patentamt
European Patent Office
Office européen des brevets

(11) **EP 0 974 718 B1**

(12) **EUROPÄISCHE PATENTSCHRIFT**

(45) Veröffentlichungstag und Bekanntmachung des Hinweises auf die Patenterteilung:
**04.08.2004   Patentblatt 2004/32**

(51) Int Cl.⁷: **E05B 17/22**, E05B 65/12, E05B 47/00, E05B 65/20

(21) Anmeldenummer: **99111716.9**

(22) Anmeldetag: **17.06.1999**

(54) **Elektromotorischer Stellantrieb für ein Kraftfahrzeugschloss**

Actuator with an electro motor for motor vehicle locks

Actionneur à moteur électrique pour des serrures de véhicule automobile

(84) Benannte Vertragsstaaten:
**DE ES FR GB IT**

(30) Priorität: **21.07.1998   DE 19832749**

(43) Veröffentlichungstag der Anmeldung:
**26.01.2000   Patentblatt 2000/04**

(73) Patentinhaber: **Brose Schliesssysteme GmbH & Co. KG**
**42369 Wuppertal (DE)**

(72) Erfinder: **Kachouh, Checrallah**
**44227 Dortmund (DE)**

(74) Vertreter: **Gesthuysen, von Rohr & Eggert**
**Patentanwälte**
**Postfach 10 13 54**
**45013 Essen (DE)**

(56) Entgegenhaltungen:
**US-A- 5 240 296**       **US-A- 5 474 338**
**US-A- 5 656 899**       **US-A- 5 722 706**
**US-A- 5 777 395**

**Beschreibung**

Gegenstand der Erfindung ist ein elektromotorischer Stellantrieb für ein Kraftfahrzeugschloß mit den Merkmalen des Oberbegriffs von Anspruch 1.

Kraftfahrzeugschlösser in diesem Sinne sind in vielen Bereichen bei einem Kraftfahrzeug einsetzbar, insbesondere als Kraftfahrzeug-Seitentürschloß, -Hecktürschloß, -Heckklappenschloß, -Schiebetürschloß, -Haubenschloß o. dgl. In diesem Sinne ist der Begriff des Kraftfahrzeugschlosses also vergleichsweise umfassend zu verstehen. In der Erläuterung in der vorliegenden Patentanmeldung wird eine Stellantriebsscheibe als Stellantriebselement beschrieben, alle anderen Arten von Stellantriebselementen, beispielsweise auch Spindelantriebe, sind denkbar und sollen vom Begriff des Stellantriebselementes mit umfaßt werden. Ebenso gilt für das Schaltelement, das hier als mechanischer Schalthebel beschrieben wird, eine weite Freiheit. Es kann sich um ein linear verlagertes Schaltelement, um ein schwenkbares Schaltelement, ebenso aber auch um ein rotierendes Schaltelement handeln.

Bei aus der Praxis bekannten elektromotorischen Stellantrieben für Kraftfahrzeugschlösser sind an die elektrische Motorsteuerung auf jeden Fall zwei elektrische oder elektronische Schalter angeschlossen, nämlich ein Schalter für das Stellantriebselement und der zweite Schalter für den Schalthebel (US - A - 5,240,296). Im Sinne einer Reihenschaltung der beiden Schalter, die informationstechnisch zu einer UND-Verknüpfung führt, erfolgt ein Ausschalten des elektrischen Antriebsmotors dann, wenn beide Schalter betätigt worden sind. Im Regelfall erfolgt die Abschaltung des elektrischen Antriebsmotors dabei durch ein Kurzschließen des elektrischen Antriebsmotors, um eine Motorbremswirkung und damit ein schnelles Stillsetzen des Stellantriebselementes zu erreichen (siehe auch DE - C - 43 34 522).

Der Erfindung liegt die Aufgabe zugrunde, bei dem zuvor erläuterten elektromotorischen Stellantrieb für ein Kraftfahrzeugschloß den schaltungstechnischen Aufwand zu verringern.

Die zuvor aufgezeigte Aufgabe ist bei einem elektromotorischen Stellantrieb für ein Kraftfahrzeugschloß mit den Merkmalen des Oberbegriffs von Anspruch 1 durch die Merkmale des kennzeichnenden Teils von Anspruch 1 gelöst.

Erfindungsgemäß ist von einem mathematischen Zusammenhang Gebrauch gemacht worden, nämlich vom Satz des De Morgan. Er gibt an, wie man eine mathematische UND-Verknüpfung durch eine mathematische ODER-Verknüpfung und umgekehrt ersetzen kann. Im speziellen Teil der Beschreibung werden Gleichung und Tabelle dazu angegeben.

Erfindungsgemäß ist erkannt worden, daß sich der Satz von De Morgan dazu nutzen läßt, bei einem elektromotorischen Stellantrieb für ein Kraftfahrzeugschloß der in Rede stehenden Art einen elektrischen oder elektronischen Schalter dadurch einzusparen, daß man die den Schalter beeinflussenden Elemente, also das Stellantriebselement und das Schaltelement, mechanisch einer "Negation" zuführt, indem man die Beeinflussung des Schalters entsprechend "negiert".

Als elektrischer oder elektronischer Schalter kommt in erster Linie ein Mikroschalter mit unter Federbelastung eingenommener erster Schaltstellung und gegen Federbelastung erreichter zweiter Schaltstellung in Frage, aber auch berührungslos betätigte elektromagnetische oder elektronische Schalter (Reed-Relais, Hall-Sensorschalter, etc.). Hier gibt es eine Vielzahl von aus dem Stand der Technik entnehmbaren Möglichkeiten, die hier nicht im einzelnen aufgeführt werden sollen.

Bei der Realisierung der Lehre des Anspruchs 1 kommt als Ergebnis eine negierte UND-Verknüpfung heraus, die bei entsprechender Gestaltung der Motorsteuerung zur gewünschten Abschaltung des elektrischen Antriebsmotors genutzt werden kann. Bei der weiteren Gestaltung nach Anspruch 2 kommt exakt die gewünschte UND-Verknüpfung heraus, die dann in der Motorsteuerung schaltungstechnisch wie die bislang verwirklichte Reihenschaltung zweier einzelner Schalter wirkt.

Im folgenden wird die Erfindung anhand einer lediglich ein Ausführungsbeispiel darstellenden Zeichnung näher erläutert. In der Zeichnung zeigt

Fig. 1    ein Ausführungsbeispiel eines elektromotorischen Stellantriebes mit einem erfindungsgemäß angeordneten und eingesetzten elektromechanischen Schalter, der Stellantrieb insgesamt in der Stellung "verriegelt-diebstahlgesichert",

Fig. 2    in einer Fig. 1 entsprechenden Darstellung den Stellantrieb in der Stellung "entriegelt",

Fig. 3    in einer Fig. 1 entsprechenden Darstellung den Stellantrieb in der Stellung "verriegelt", jedoch nicht diebstahlgesichert,

Fig. 4    einen elektromotorischen Stellantrieb mit einer Motorsteuerung des Standes der Technik mit darin ausschnittweise gezeigter Reihenschaltung von zwei elektrischen Schaltern.

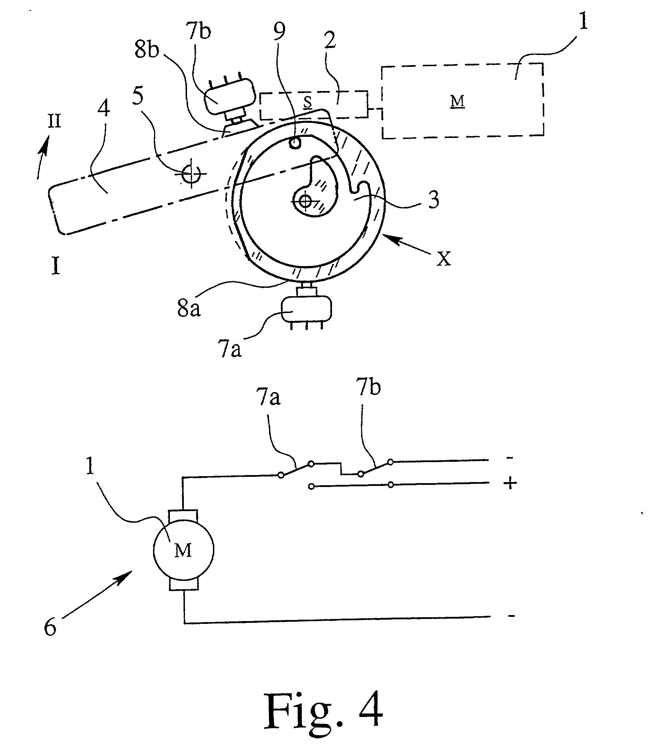

Anhand von Fig. 4 soll zunächst das Grundprinzip eines elektromotorischen Stellantriebs der in Rede stehenden Art erläutert werden.

Es handelt sich um einen elektromotorischen Stellantrieb für ein Kraftfahrzeugschloß, beispielsweise ein Kraftfahrzeug-Hecktürschloß, wobei entsprechende Alternativen bereits im allgemeinen Teil der Beschreibung erläutert worden sind. Darauf darf verwiesen werden. Dargestellt ist ein elektrischer Antriebsmotor 1, der über eine Schnecke 2 oder Spindel ein hier als Stellantriebsscheibe 3 oder Schneckenrad beispielhaft dargestelltes Stellantriebselement antreibt. Im allgemeinen Teil der Beschreibung ist bereits ebenfalls darauf hingewiesen worden, welche vielen anderen Formen von Stellantriebselementen hier realisierbar sind.

Von dem Stellantriebselement 3 zwischen mindestens zwei Funktionsstellungen I, II hin und her verlagerbar ist ein Schalthebel 4, der auf einer Lagerachse 5 hier schwenkbar gelagert ist. Es kann sich auch um ein anderes mechanisches Schaltelement 4 handeln, beispielsweise um einen Schieber oder ein Drehteil.

In Fig. 4 unten dargestellt ist eine elektrische Motorsteuerung 6 zur Steuerung des elektrischen Antriebsmotors 1, mit der der elektrische Antriebsmotor 1 einschaltbar und bei einer bestimmten freien Position X des Stellantriebselementes 3 und zeitgleichem Auftreten der einen, in Fig. 4 dargestellten Funktionsstellung I des Schaltelementes 4 ausschaltbar ist.

In dem den Stand der Technik darstellenden Ausführungsbeispiel in Fig. 4 sind dazu zwei Schalter 7a, 7b vorgesehen, diese sind an die elektrische Motorsteuerung 6 angeschlossen, das zeigt Fig. 4 unten. Jeder der Schalter 7 nimmt selbsttätig eine erste Schaltstellung "0" und beeinflußt von einem Beeinflussungselement eine zweite Schaltstellung "1" ein. Im dargestellten Ausführungsbeispiel ist das dadurch erreicht, daß die Schalter 7 jeweils federbelastet sind und von einer Steuerkulisse 8a am Stellantriebselement 3 bzw. einer Steuerkulisse 8b am Schalthebel 4 gegen die Federkraft betätigbar sind.

Bei anderen Ausführungsformen der Schalter 7 können diese berührungslos betätigbar sein, indem entsprechende Magnetkörper in die Beeinflussungselemente, also das Stellantriebselement 3 und das Schaltelement 4 eingebaut sind. Das ist aus dem Stand der Technik umfangreich bekannt, auf entsprechende Vorveröffentlichungen zu diesem Thema darf hier verwiesen werden (DE - A - 44 33 042).

Man erkennt in Fig. 4 unten, daß die beiden in Reihe geschalteten Kontakte der Schalter 7a und 7b dazu führen, daß ein Kurzschluß des elektrischen Antriebsmotors 1 nur dann realisiert ist, wenn beide Schalter 7a und 7b betätigt sind. Das ist dann der Fall, wenn die in Fig. 4 dargestellte Lage einerseits des Stellantriebselementes 3, andererseits des Schalthebels 4 erreicht ist. Diese Lage entspricht der Position "verriegelt" des Kraftfahrzeugschlosses, einer Position im "Freiraum" zwischen der einen Endstellung "entriegelt" und der anderen Endstellung "verriegelt-diebstahlgesichert". Die beiden Endstellungen werden im dargestellten und insoweit bevorzugten Beispiel durch das Anlaufen des Stellantriebselementes 3 an den Zapfen 9 am Schalthebel 4 realisiert (Blockbetrieb; Auswertung der erhöhten Stromaufnahme des elektrischen Antriebsmotors oder Zeitabschaltung). Auch hierzu gibt es im Stand der Technik verschiedene Vorbilder, auf die hier verwiesen werden darf.

Für die erfindungsgemäße Schaltungstechnik, die die Einsparung eines kompletten Schalters bei gleichem schaltungstechnischem Ergebnis ermöglicht, ist nun der zuvor bereits erläuterte Satz von De Morgan von Bedeutung. Er lautet:

$$\overline{A \cdot B} = \overline{A} + \overline{B}$$

wobei hier der Multiplikationspunkt die Verknüpfung UND repräsentiert und das Additionszeichen + die informationstechnische Verknüpfung ODER repräsentiert. Der Querstrich bedeutet immer, daß die entsprechende Größe in der Negation verwendet wird, also negiert ist.

Der Satz von De Morgan bedeutet im übrigen weiter auch

$$A \cdot B = \overline{\overline{A} + \overline{B}}$$

wobei daraus deutlich wird, daß eine doppelte Negation letztlich dann zur endgültigen, richtigen UND-Verknüpfung führt.

Ein elektrischer Schalter 7 der zuvor erläuterten Art kann nun auch von zwei Beeinflussungselementen betätigbar sein. Wenn nur eines der Beeinflussungselemente einen solchen Schalter 7 betätigt, dann nimmt er bereits die zweite Schaltstellung "1" ein, unabhängig davon, ob auch das zweite Beeinflussungselement ihn betätigt oder nicht. Versteht man unter "0" immer die Nicht-Beeinflussung und unter "1" immer die Beeinflussung und versteht man unter "A" das Stellantriebselement 3 und unter "B" das Schaltelement 4, so ergibt der Einsatz eines einzigen Schalters 7, der sowohl vom Stellantriebselement 3 als auch vom Schaltelement 4 beeinflußt wird, folgendes:

| $A(3)$ | $B(4)$ | $A{+}B(7)$ | $A{\cdot}B$ | $\overline{A{\cdot}B}$ |
|--------|--------|------------|-------------|------------------------|
| 0 | 0 | 0 | 0 | 1 |
| 0 | 1 | 1 | 0 | 1 |
| 1 | 0 | 1 | 0 | 1 |
| 1 | 1 | 1 | 1 | 0 |

| $\overline{A}(3)$ | $\overline{B}(4)$ | $\overline{A}{+}\overline{B}$ | $\overline{\overline{A}{+}\overline{B}}$ |
|-------------------|-------------------|-------------------------------|-------------------------------------------|
| 1 | 1 | 1 | 0 |
| 1 | 0 | 1 | 0 |
| 0 | 1 | 1 | 0 |
| 0 | 0 | 0 | 1 |

Man sieht also, der eine Schalter verhält sich wie eine ODER-Verknüpfung. Nach dem Satz von De Morgan wird diese zur negierten UND-Verknüpfung, wenn man in beiden Fällen die negierten Eingangsgrößen verwendet.

Nach der Lehre ist also vorgesehen, daß nur ein elektrischer Schalter 7 vorhanden und dieser eine Schalter 7 mechanisch so angeordnet ist, daß er sowohl vom Stellantriebselement 3 als auch vom Schaltelement 4 in die zweite Schaltstellung "1" schaltbar ist und daß das Stellantriebselement 3 in seiner bestimmten Position X und das Schaltelement 4 in seiner ersten Funktionsstellung I den Schalter 7 nicht beeinflußt. Diese Nicht-Beeinflussung stellt mechanisch ausgedrückt die Forderung der "Negation" der Eingangsgröße dar. Jetzt ist nur noch vorzusehen, daß der elektrische Antriebsmotor 1 bei nicht beeinflußtem Schalter 7 ausgeschaltet, insbesondere also kurzgeschlossen ist, dann ist mit einem einzigen Schalter 7 die gewünschte negierte UND-Verknüpfung nach der ersten oben angegebenen Formel schaltungstechnisch umgesetzt.

Die oben angegebene zweite Werttabelle zeigt an, was passiert, wenn man schaltungstechnisch noch vorsieht, daß das Ausgangssignal des Schalters 7 invertiert und dann erst schaltungstechnisch verarbeitet wird. Ein Vergleich mit der vorletzten Spalte der ersten Wertetabelle zeigt, daß das Ergebnis der erneuten Invertierung, die schaltungstechnisch eine informationstechnische Negation umsetzt, dazu führt, daß das Ergebnis einer UND-Verknüpfung der Eingangsgrößen entspricht und damit exakt die zwei Schalter des Standes der Technik ersetzt.

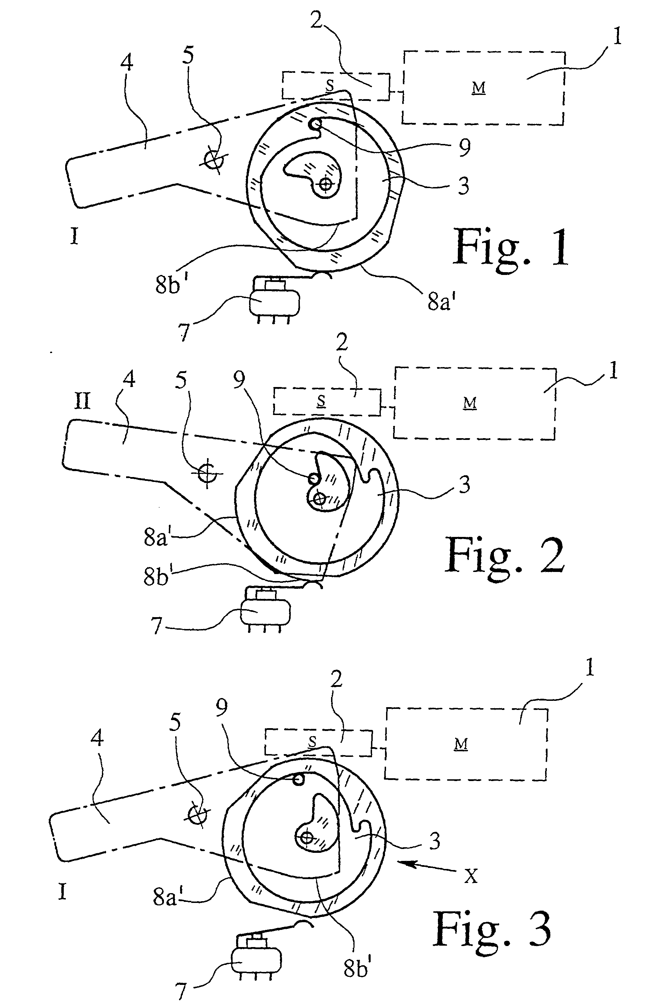

Entscheidend bei allem ist, daß mit einer "negierten" Betätigung des Schalters 7 gearbeitet wird. Bei einem elektromechanischen Schalter bedeutet das die Realisierung einer "komplementären" Steuerkulisse. Man erkennt das gut in den Fig. 1, 2 und 3. Die komplementäre Steuerkulisse ist dabei die Steuerkulisse 8a' für das Stellantriebselement 3 und 8b' für den Schalthebel 4. Letzterer ist dazu auf der "gegenüberliegenden" Seite einfach erweitert worden. Für die ebenfalls einsetzbaren berührungslos betätigbaren elektronischen Schalter lassen sich entsprechende Anordnungen realisieren.

Mit der erfindungsgemäßen Konstruktion erreicht man die Einsparung eines kompletten Schalters (Mikroschalter oder anderweitiger Sensor) mit der entsprechenden Einsparung von Folgekosten (Anschaffung, Verschaltung, Montage, Handhabung, Lagerhaltung etc.), dementsprechend eine erhöhte Zuverlässigkeit, weil ein Schalter weniger ausfällt, die Ausfallwahrscheinlichkeit also etwa halbiert wird, das Ganze ohne jeden zusätzlichen Aufwand, lediglich durch eine intelligente schaltungstechnische Auswertung.

Anstelle der ersten Funktionsstellung I des Schaltelementes 4 kann natürlich auch die zweite Funktionsstellung II oder eine weitere, überdies noch vorgesehene Funktionsstellung gewählt werden. Entsprechendes gilt für andere Positionen und Schaltstellungen, insbesondere die des Stellantriebselementes 3, die hier eingenommen werden.

**Patentansprüche**

1.    Elektromotorischer Stellantrieb für ein Kraftfahrzeugschloß,

   mit einem elektrischen Antriebsmotor (1),

   mit einer von dem elektrischen Antriebsmotor (1) angetriebenen Stellantriebsscheibe (3) oder einem anderen Stellantriebselement,

   mit einem von dem Stellantriebselement (3) zwischen mindestens zwei Funktionsstellungen (I, II) hin und her verlagerbaren Schalthebel (4) oder einem anderen mechanischen Schaltelement, und

mit einer elektrischen Motorsteuerung (6), mit der der elektrische Antriebsmotor (1) einschaltbar und bei einer bestimmten freien Position (X) des Stellantriebselementes (3) und zeitgleichem Auftreten der einen Funktionsstellung (I) des Schaltelementes (4) ausschaltbar, insbesondere kurzschließbar ist,

wobei ein elektrischer oder elektronischer Schalter (7) vorgesehen und an die elektrische Motorsteuerung (6) angeschlossen ist und

wobei der Schalter (7) selbsttätig eine erste Schaltstellung ("0") und beeinflußt von einem Beeinflussungselement eine zweite Schaltstellung ("1") einnimmt,

**dadurch gekennzeichnet,**

**daß** nur ein elektrischer Schalter (7) vorgesehen und dieser eine Schalter (7) mechanisch so angeordnet ist, daß er sowohl vom Stellantriebselement (3) als auch vom Schaltelement (4) in die zweite Schaltstellung ("1") schaltbar ist und

**daß** das Stellantriebselement (3) in seiner bestimmten Position (X) und das Schaltelement (4) in seiner ersten Funktionsstellung (I) den Schalter (7) nicht beeinflußt und der elektrische Antriebsmotor (1) bei nicht beeinflußtem Schalter (7) ausgeschaltet, insbesondere kurzgeschlossen ist.

2. Elektromotorischer Stellantrieb nach Anspruch 1, **dadurch gekennzeichnet, daß** das Ausgangssignal des Schalters (7) invertiert und dann verarbeitet wird.


**Claims**

1. Electric motor-driven servo-drive for a motor vehicle lock,
   with an electric drive motor (1),
   with a servo-drive disk (3) or another servo-drive element driven by the electric drive motor (1),
   with an operating lever (4) movable back and forth between at least two operating positions (I, II) by the servo-drive element (3) or another mechanic operating element, and
   with an electric motor control (6), with which the electric drive motor (1) can be turned on and can be turned off, in particular short-circuited, at a predetermined free position (X) of the servo-drive element (2) and with simultaneous occurrence of the one operating position (I) of the switching element (4),
   wherein one electric or electronic switch (7) is provided and connected to the electric motor control (6) and
   wherein the switch (7) automatically assumes a first switching position ("0") and being influenced by an influencing element assumes a second switching position ("1"),
   **characterized in**
   **that** only a single electric switch (7) is provided and this single switch (7) is mechanically arranged so that it can be switched into the second position ("1") by both the servo-drive element (3) as well as the switching element (4) and
   **that** the servo-drive element (3) in its predetermined position (X) and the switching element (4) in its first operating position (I) do not influence the switch (7) and the electric drive motor (1) is turned off, in particular short-circuited, when the switch (7) is not influenced.

2. Electric motor-driven servo-drive according to claim 1, **characterized in that** the output signal of the switch (7) is inverted and then processed.


**Revendications**

1. Servomoteur électrique pour une serrure de véhicule automobile, avec un moteur d'entraînement électrique (1), avec un disque de servomoteur (3) entraîné par le moteur électrique (1) ou un autre élément de servomoteur, avec un levier de commutation (4) pouvant être déplacé dans un sens et dans l'autre par l'élément de servomoteur (3) entre au moins deux positions de fonctionnement (I, II) ou avec un autre élément de commutation mécanique et avec une commande électrique du moteur (6), permettant d'enclencher le moteur d'entraînement électrique (1) et de le couper, notamment de le court-circuiter dans une position libre (X) définie de l'élément de servomoteur (3) lors d'une apparition simultanée d'une première position (I) de l'élément de commutation (4), un commutateur (7) électrique ou électronique étant prévu et raccordé sur la commande électrique du moteur (6) et le commutateur (7) se mettant dans une première position de commutation (« 0 ») de façon automatique et dans une seconde position de commutation (« 1 ») sous l'influence d'un élément d'influence, **caractérisé en ce que** seul un commutateur électrique (7) est prévu et **en ce que** cet unique commutateur (7) est mécaniquement placé de façon à être commutable dans la seconde position de commutation (« 1 »), aussi bien par l'élément de servomoteur (3) que par l'élément de commutation (4) et **en ce que** l'élément de servomoteur (3) dans sa position définie (X) et l'élément de commutation (4) dans sa première position de fonctionnement (I) n'influencent pas le commutateur (7) et **en ce que** lorsque le commutateur (7) n'est pas influencé, le moteur d'entraînement électrique (1) est coupé, notamment court-circuité.

2. Servomoteur électrique selon la revendication 1, **caractérisé en ce que** le signal de sortie du commutateur (7) est inversé puis traité.

Fig. 1

Fig. 2

Fig. 3

7

Fig. 4